# EUROPÄISCHE PATENTANMELDUNG

(11) **EP 3 561 743 A1**
(43) Veröffentlichungstag der Anmeldung: **30.10.2019**
(21) Anmeldenummer: 18169710.3
(22) Anmeldetag: 27.04.2018
(51) Int. Cl.: G06Q 10/04, G06Q 50/06

(54) **VERFAHREN ZUR ERMITTLUNG EINER AUSLEGUNG EINES ENERGIESYSTEMS SOWIE ENERGIESYSTEM**

(71) Anmelder: Siemens Aktiengesellschaft, 80333 München (DE)
(72) Erfinder: Ackermann, Simon, 80798 München (DE); Kautz, Martin, 91056 Erlangen (DE); Schäfer, Jochen, 90408 Nürnberg (DE); Szabo, Andrei, 85521 Ottobrunn (DE); Thiem, Sebastian, 90409 Nürnberg (DE)

(57) **Zusammenfassung**

Es wird ein Verfahren zur Ermittlung einer Auslegung eines Energiesystems mittels eines Optimierungsverfahrens vorgeschlagen, das wenigstens die folgenden Schritte umfasst:
- Bereitstellen einer Mehrzahl von Werten (421) wenigstens eines Parameters des Optimierungsverfahrens mittels eines Ziehens der Werte (421) gemäß einer Wahrscheinlichkeitsverteilung (42) des Parameters;
- Festlegen jeweils einer Einzelzielfunktion des Energiesystems für jeden der Werte (421) des Parameters;
- Ausbilden einer Gesamtzielfunktion mittels der Einzelzielfunktionen; und
- Extremalisieren der Gesamtzielfunktion mittels des Optimierungsverfahrens.

Weiterhin betrifft die Erfindung ein Energiesystem.

## Beschreibung

Die Erfindung betrifft ein Verfahren zur Ermittlung einer Auslegung eines Energiesystems mittels eines Optimierungsverfahrens. Weiterhin betrifft die Erfindung ein Energiesystem, dessen Komponenten gemäß einem Verfahren der vorliegenden Erfindung oder einer ihrer Ausgestaltungen ausgelegt sind.

Energiesysteme, beispielsweise multimodale Energiesysteme, stellen wenigstens eine Energieform für einen Energieverbraucher, beispielsweise ein Gebäude, eine industrielle Anlage oder eine private Anlage, bereit, wobei die Bereitstellung insbesondere durch eine Umwandlung verschiedener Energieformen, mittels eines Transports der verschiedenen Energieformen und/oder durch gespeicherte Energieformen erfolgen kann. Mit anderen Worten werden die verschiedenen Energieformen, insbesondere Wärme, Kälte und/oder elektrische Energie mittels des (multimodalen) Energiesystems bezüglich ihrer Erzeugung, ihrer Bereitstellung und/oder ihrer Speicherungen gekoppelt.

Es ist bekannt Energiesysteme mittels eines Energiesystemdesignverfahrens möglichst optimal auszulegen. Hierzu wird typischerweise ein mathematisches Modell des Energiesystems verwendet, welches eine Optimierung des Energiesystems bezüglich einer Zielfunktion mittels eines nummerischen Optimierungsverfahrens ermöglicht. Typischerweise sind hierzu eine Mehrzahl von Parametern (Eingangsparametern), beispielsweise Vorhersagen von Lastprofilen und/oder Zustandsmessungen, zur Parametrisierung des mathematischen Modells erforderlich. Die zur Parametrisierung erforderlich Parameter, beispielsweise Lastzeitreihen, Energiepreise und/oder Wetterdaten werden hierbei deterministisch vorgegeben. Dadurch wird das Energiesystem basierend auf den deterministischen Parameter ebenfalls deterministisch optimiert.

Ein Energiesystemdesignverfahren ist beispielsweise aus dem Dokument "Project-level multi-modal energy system design - Novel approach for considering detailed component models and example case study for airports", Sebastian Thiem et al., Energy, Volume 133, Pages 691-709, (2017) bekannt.

Bei bekannten Energiesystemverfahren ist es erforderlich Annahmen über die zukünftige Entwicklung der Werte der Parameter zu treffen. Beispielsweise ist nicht bekannt, wie sich der Gaspreis zukünftig entwickelt. Es wird daher der zukünftige Wert des Gaspreises durch Plausibilitätsannahme festgelegt. Ausschließlich dieser plausible Wert des Gaspreises wird bei bekannten Energiesystemdesignverfahren berücksichtigt. Dadurch wird jedoch eine möglichst optimale Auslegung des Energiesystems erschwert, da diese signifikant von den getroffen scheinbar plausiblen Annahmen abhängen kann.

Der vorliegenden Erfindung liegt die Aufgabe zugrunde, ein verbessertes Energiesystemdesignverfahren bereitzustellen.

Die Aufgabe wird durch ein Verfahren mit den Merkmalen des unabhängigen Patentanspruches 1 sowie durch eine Vorrichtung mit den Merkmalen des unabhängigen Patentanspruches 10 gelöst. In den abhängigen Patentansprüchen sind vorteilhafte Ausgestaltungen und Weiterbildungen der Erfindung angegeben.

Das erfindungsgemäße Verfahren zur Ermittlung einer Auslegung eines Energiesystems mittels eines Optimierungsverfahrens umfasst wenigstens die folgenden Schritte:
- Bereitstellen einer Mehrzahl von Werten wenigstens eines Parameters des Optimierungsverfahrens mittels eines Ziehens der Werte gemäß einer Wahrscheinlichkeitsverteilung des Parameters;
- Festlegen jeweils einer Einzelzielfunktion des Energiesystems für jeden der Werte des Parameters;
- Ausbilden einer Gesamtzielfunktion mittels der Einzelzielfunktionen; und
- Extremalisieren der Gesamtzielfunktion mittels des Optimierungsverfahrens.

Das erfindungsgemäße Verfahren zur Ermittlung der Auslegung des Energiesystems entspricht einem Energiesystemdesignverfahren beziehungsweise kann als Energiesystemdesignverfahren bezeichnet werden. Mittels des erfindungsgemäßen Verfahrens wird die Auslegung des Energiesystems, insbesondere die Festlegung seiner Komponenten, ermittelt.

Die Auslegung des Energiesystems kann eine Ermittlung und/ oder Bestimmung und/oder Festlegung seiner Komponenten, die das Energiesystem aufweist, umfassen. Weiterhin kann die Auslegung des Energiesystems, die Dimension und/oder Kapazitäten seiner Komponenten, die Kosten der Komponenten, beispielsweise Kosten für eine Energiespeicherung, Energieströme und/oder Leistungsströme, umfassen. Mit anderen Worten kann jede beliebige Systemgröße des Energiesystems und/oder jede beliebige das Energiesystem charakterisierende Größe bei der Optimierung in dem Sinne berücksichtigt werden, dass ein möglichst optimaler Wert der Systemgröße beziehungsweise der charakterisierenden Größe ermittelt wird. Die Berücksichtigung der Systemgröße und/oder charakterisierenden Größe kann mittels ihres Eingehens in die Einzelzielfunktion beziehungsweise Gesamtzielfunktion erfolgen.

Mit anderen Worten wird als Auslegung des Energiesystems insbesondere seine Struktur und/oder sein Aufbau bezüglich seiner Komponenten, dessen Dimensionierung und/oder dessen Wirtschaftlichkeitsanalyse bezeichnet. Die möglichst optimale Auslegung des Energiesystems wird ebenfalls als Optimierungsproblem bezeichnet. Mittels des Optimierungsverfahrens wird diese möglichst optimale Auslegung des Energiesystems, das heißt beispielsweise seine Struktur, seine Dimensionierung, seine Wirtschaftlichkeitsanalyse und/oder dergleichen, ermittelt.

Als Komponenten kann das Energiesystem jeweils einen oder mehrere Stromgeneratoren, Kraftwärmekopplungsanlagen, insbesondere Blockheizkraftwerke, Gasboiler, Dieselgeneratoren, Wärmepumpen, Kompressionskältemaschinen, Absorptionskältemaschinen, Pumpen, Fernwärmenetzwerke, Energietransferleitungen, Windkrafträder oder Windkraftanlagen, Photovoltaikanlagen, Biomasseanlagen, Biogasanlagen, Müllverbrennungsanlagen, industrielle Anlagen, konventionelle Kraftwerke und/oder dergleichen umfassen.

Eine Größe ist ein Parameter des Optimierungsverfahrens, wenn dessen Wert oder dessen Werte bei der Optimierung als konstant angesehen werden. Mit anderen Worten ist der Parameter fest aber beliebig. Parameter können ebenfalls als Eingangsparameter bezeichnet werden.

Eine Größe ist eine Variable des Optimierungsverfahrens, wenn deren Wert oder deren Werte bei der Optimierung variieren. Mit anderen Worten wird mittels des Optimierungsverfahrens ein bestmöglicher beziehungsweise möglichst optimaler Wert der Variablen ermittelt.

Nebenbedingungen, Randbedingungen oder Zwangsbedingungen - hier zusammenfassend als Nebenbedingungen bezeichnet - sind Bedingungen, Eigenschaften und/oder Relationen, die die Parameter und/oder Variablen des Optimierungsverfahrens erfüllen müssen. Diese können als Gleichung und/oder Ungleichung gegeben sein, und/oder explizit eine Menge von zulässigen Werten der Parameter und/oder zulässigen Werten der Variablen beschreiben.

Das Optimierungsverfahren ist beispielsweise ein mathematisches und/oder nummerisches Optimierungsverfahren, insbesondere ein Simplexverfahren, welches beispielsweise mittels einer Rechenvorrichtung, insbesondere mittels eines Computers, durchführbar ist. Mittels des Optimierungsverfahrens wird die Gesamtzielfunktion extremalisiert, das heißt maximiert oder minimiert. Hierbei ist es nicht erforderlich, ein exaktes Maximum beziehungsweise Minimum zu berechnen. Es ist ausreichend, eine näherungsweise optimale Auslegung (Lösung) zu ermitteln, beispielsweise mittels eines Approximationsalgorithmus und/oder mittels einer Festlegung eines Schwellenwertes für einen Fehler des Optimierungsverfahrens.

Gemäß der vorliegenden Erfindung wird wenigstens ein Parameter für das Optimierungsverfahren bereitgestellt. Ein Grundgedanke der Erfindung ist, dass die Werte des Parameters mittels eines Ziehens gemäß seiner Wahrscheinlichkeitsverteilungen beziehungsweise Verteilung festgelegt werden. Mit anderen Worten ist der Parameter eine stochastische Zufallsvariable (nicht zu verwechseln mit den Variablen des Optimierungsverfahrens), die gemäß ihrer Wahrscheinlichkeitsverteilung verschiedene Werte annimmt. Die Werte des Parameters stellen somit eine Stichprobe (englisch: Sample) in Bezug auf die Wahrscheinlichkeitsverteilung dar und können ebenfalls als Stichprobenwerte bezeichnet werden. Eine Mehrzahl von solchen stochastischen Parametern mit entsprechenden Wahrscheinlichkeitsverteilungen kann vorgesehen sein. Ergänzend können deterministische Parameter vorgesehen sein.

Für jeden der gezogenen Werte des Parameters wird eine Einzelzielfunktion des Energiesystems festgelegt. Mit anderen Worten modelliert die Einzelfunktion bereits das Energiesystem für den gezogen Wert des Parameters. Gemäß der vorliegenden Erfindung wird aus den Einzelzielfunktionen, die durch die gezogen Werte des Parameters gebildet werden, eine Gesamtzielfunktion ausgebildet. Erfindungsgemäß wird die Gesamtzielfunktion mittels des Optimierungsverfahrens extremalisiert. Dadurch wird eine der Anzahl der gezogenen Werte des Parameters entsprechende Mehrzahl von gleichartigen Energiesystemen optimiert.

Mit anderen Worten wird die Mehrzahl von Werten des Parameters, die stochastisch gezogen wurden (Stichproben), beim Optimierungsverfahren und somit bei der Ermittlung der Auslegung des Energiesystems berücksichtigt. Die Berücksichtigung der verschieden Werte des Parameters erfolgt hierbei über die Gesamtzielfunktion, die mittels des Optimierungsverfahrens bestmöglich optimiert, das heißt extremalisiert wird. Es fließen somit die gezogenen Werte des Parameters in die Optimierung ein. Bekannte Verfahren berücksichtigen hingegen lediglich einen möglichst plausiblen Wert des Parameters.

Mit anderen Worten wird für jeden (gezogenen) Wert des Parameters ein Szenario, das heißt ein Modell des Energiesystems bereitgestellt. Hierbei korrespondiert zu jedem Szenario eine Einzelzielfunktion des Energiesystems. Beispielsweise ist der Parameter ein Gaspreis, wobei für jeden Wert des Gaspreises eine Einzelzielfunktion bereitgestellt wird. Man könnte sinnbildlich sagen, dass für jeden Wert des Parameters ein Energiesystem vorliegt, wobei mittels der Bildung der Gesamtzielfunktion diese Mehrzahl von vorliegenden Energiesystemen vorteilhafterweise mittels des Optimierungsverfahrens parallel betrachtet und gleichzeitig möglichst optimal ausgelegt werden.

Ein besonderer Vorteil des erfindungsgemäßen Verfahrens ist, dass die Wahrscheinlichkeitsverteilung des Parameters über die Stichprobenwerte des Parameters bei der Ermittlung der Auslegung des Energiesystems berücksichtigt wird. Mit anderen Worten hat das Optimierungsverfahren Kenntnis über die Wahrscheinlichkeitsverteilung des Parameters. Dadurch wird das Energiesystem nicht wie im Stand der Technik vorgesehen im Rahmen einer Parametervariation oder Sensitivitätsanalyse deterministisch optimiert, sondern es werden eine Mehrzahl von parallelen Szenarien gleichzeitig betrachtet und gemäß der Wahrscheinlichkeitsverteilung des Parameters optimiert. Insbesondere ist hierbei eine Gewichtung der Szenarien typischerweise nicht erforderlich, da die Werte des Parameters gemäß seiner Wahrscheinlichkeitsverteilung bereits gezogen und somit entsprechend gewichtet sind. Eine wenigstens teilweise Gewichtung der verschiedenen Szenarien beziehungsweise Einzelzielfunktionen kann jedoch vorgesehen sein.

Ein Grundgedanke der vorliegenden Erfindung ist die Ermittlung von Stichproben des stochastischen Parameters für ein Energiesystemdesignproblem und die parallele und gleichzeitige Berücksichtigung dieser Mehrzahl von Stichproben innerhalb des Optimierungsverfahrens. Dadurch erfolgt vorteilhafterweise eine in Bezug auf den Parameter stochastische Optimierung des Energiesystems.

Gemäß einer vorteilhaften Ausgestaltung der Erfindung wird die Gesamtzielfunktion mittels einer Summe der Einzelzielfunktionen gebildet.

Hierbei kann eine gewichtete Summe zur Bildung der Gesamtzielfunktion aus den Einzelzielfunktionen vorgesehen sein. Allerdings ist eine Gewichtung gemäß dem vorliegenden Verfahren nicht zwingend erforderlich, da die Werte des Parameters bereits gemäß seiner Wahrscheinlichkeitsverteilung gezogen sind. Durch die Bildung der Gesamtzielfunktion mittels der Summe der Einzelzielfunktionen werden die gezogenen Werte des Parameters, die zu den Einzelzielfunktionen des Energiesystems korrespondieren, beim Optimierungsverfahren parallel beziehungsweise gleichzeitig berücksichtigt. Mit anderen Worten wird die Gesamtzielfunktion unter Berücksichtigung der Wahrscheinlichkeitsverteilung des Parameters optimiert.

Das erörterte Vorgehen kann anhand eines Gaspreises verdeutlicht werden. Selbiges gilt entsprechend für andere oder weitere stochastische Parameter.

Der Parameter sei exemplarisch der Gaspreis. Im Sinne der vorliegenden Erfindung ist dieser eine Zufallsvariable, die gemäß einer Wahrscheinlichkeitsverteilung verschiedene Werte annimmt. Das ist deshalb der Fall, da die zukünftigen Werte des Gaspreises nur mit einer gewissen Wahrscheinlichkeit angegeben werden können. Hierbei kann die Wahrscheinlichkeit die Unsicherheit des Gaspreises für die Zukunft beschreiben, darstellen und/oder modellieren. Mit anderen Worten gilt *Gᵢ* = *G*(*pᵢ*), wobei *G* den Gaspreis, *Gᵢ* den *i*-ten Wert des Gaspreises *G* und *pᵢ* die Wahrscheinlichkeit des *i*-ten Wertes *Gᵢ* des Gaspreises *G* bezeichnet. Mit anderen Worten ist *pᵢ* die Wahrscheinlichkeit, dass der Gaspreis *G* den Wert *Gᵢ* aufweist. Für jeden Wert des Gaspreises wird eine Einzelzielfunktion *Zᵢ* festgelegt. Die Gesamtzielunktion *Z* wird durch die Summe *Z* = ∑*ᵢZᵢ* der Einzelzielfunktionen *Zᵢ* gebildet. Eine gewichtete Summe *Z* = ∑*ᵢλᵢZᵢ* mit Gewichtungsfaktoren *λ*ᵢ kann vorgesehen sein. Typischerweise weisen die Gewichtungsfaktoren *λᵢ* einen Wert im abgeschlossenen Bereich von Null bis Eins auf. Zu jeder Einzelzielfunktion können weiterhin, insbesondere verschiedene, Nebenbedingungen zugehörig sein. Der Gesamtzielfunktion können die Nebenbedingungen der Einzelzielfunktionen und/oder weitere Nebenbedingungen zugehörig sein. Die Gesamtzielfunktion wird unter einer Berücksichtigung der Nebenbedingungen extremalisiert, das heißt bezüglich ihres Wertes optimiert, wodurch die Auslegung des Energiesystems unter Berücksichtigung der Werte des Gaspreises *Gᵢ* ermittelt wird.

In einer vorteilhaften Ausgestaltung der Erfindung wird für jede der Einzelzielfunktionen wenigstens eine Nebenbedingung bereitgestellt, wobei die Nebenbedingungen beim Extremalisieren der Gesamtzielfunktion berücksichtigt werden.

Vorteilhafterweise werden dadurch die einem der Werte des Parameters zugehörigen Nebenbedingungen, die vom Wert des Parameters abhängig sein können, parallel, das heißt gesamtheitlich über die Bildung der Gesamtzielfunktion beim Optimierungsverfahren berücksichtigt. Dadurch wird vorteilhafterweise die Ermittlung der Auslegung des Energiesystems weiter verbessert.

In einer vorteilhaften Weiterbildung der Erfindung wird als Wahrscheinlichkeitsverteilung eine Normalverteilung verwendet.

Vorteilhafterweise sind typische Parameter normalverteilt, das heißt, dass ihre Werte gemäß einer Normalverteilung verteilt sind. Ein weiterer Vorteil ist, dass eine Normalverteilung effizient numerisch generierbar ist.

Besonders bevorzugt erfolgt das Ziehen der Werte des Parameters mittels eines Monte-Carlo-Verfahrens.

Das ist insbesondere dann von Vorteil, wenn die Wahrscheinlichkeitsverteilung des Parameters nicht ausreichend bekannt ist. Weiterhin ist das Monte-Carlo-Verfahren besonders effizient und numerisch gut implementierbar.

Vorteilhafterweise ermöglicht das Monte-Carlo-Verfahren ein effizientes und schnelles nummerisches Bereitstellen der Werte des Parameters gemäß seiner Wahrscheinlichkeitsverteilung. Mit anderen Worten wird eine Mehrzahl von Stichproben mittels des Monte-Carlo-Verfahrens für den Parameter gezogen. Mit anderen Worten ermöglicht das Monte-Carlo-Verfahren ein repräsentatives Wiedergeben der Wahrscheinlichkeitsverteilung des stochastischen Parameters. Weiterhin ermöglicht das Monte-Carlo-Verfahren ein Bereitstellen einer Mehrzahl von gleichartigen Zufallsexperimenten (Szenarien), wobei die Zufallsexperimente zu den Werten des Parameters korrespondieren.

In einer vorteilhaften Weiterbildung der Erfindung werden/ wird als Parameter eine elektrische, thermische, chemische oder/und mechanische Last, ein Preis und/oder wenigstens eine metrologische Größe verwendet.

Vorteilhafterweise werden dadurch eine Vielzahl von stochastischen Parametern, insbesondere Preise und/oder mechanischen Lasten und/oder metrologischen Größen, beim Optimierungsverfahren und somit bei der Ermittlung der Auslegung des Energiesystems berücksichtigt. Insbesondere ist das Bereitstellen von gezogenen Werten einer Mehrzahl von Parametern vorgesehen. Dadurch wird eine Mehrzahl von stochastischen Parametern des Energiesystems bei seiner Auslegung, das heißt beim Optimierungsverfahren berücksichtigt. Das Energiesystem wird dadurch vorteilhafterweise stochastisch möglichst optimal ausgelegt.

Gemäß einer vorteilhaften Ausgestaltung der Erfindung werden/wird als Einzelzielfunktion die Gesamtkosten des multimodalen Energiesystems und/oder die Kohlenstoffdioxidemission des multimodalen Energiesystems und/oder der Primärenergieeinsatz des Energiesystems verwendet.

Vorteilhafterweise werden dadurch die Gesamtkosten des Energiesystems, die Kohlenstoffdioxidemissionen und/oder der Primärenergieeinsetz des Energiesystems optimiert, insbesondere minimiert. Beispielsweise stellt die Kohlenstoffdioxidemission des Energiesystems beziehungsweise die Gesamtkohlenstoffdioxidemission des Energiesystems die Einzelzielfunktionen dar. Weiterhin können die Gesamtkosten des Energiesystems, die sich typischerweise aus Investitionskosten, variablen Investitionskosten, Betriebskosten und/oder Unterhaltskosten und/oder Kosten für die Instandhaltung, Verbrauchskosten und/oder Energiekosten und/oder Anfahrkosten zusammensetzen, als Einzelzielfunktionen herangezogen und minimiert werden. Mit anderen Worten werden unter der Berücksichtigung der Volatilität des Parameters die Gesamtkosten des Energiesystems minimiert.

Gemäß einer vorteilhaften Ausgestaltung der Erfindung wird der Wert jeder Einzelzielfunktion gemäß der ermittelten Auslegung des Energiesystems und mittels ihres zugehörigen Wertes des Parameters berechnet.

Mit anderen Worten wird jede der Einzelzielfunktionen nach der Ermittlung der Auslegung des Energiesystems, das heißt nach der Extremalisierung der Gesamtzielfunktion, für den zugehörigen Wert des Parameters ausgewertet. Dadurch ergibt sich der genannte Wert der Einzelzielfunktion, der beispielsweise zu den Gesamtkosten eines gemäß der Einzelzielfunktion ausgelegten Energiesystems korrespondiert. Dadurch wird vorteilhafterweise eine Wahrscheinlichkeitsverteilung der Einzelzielfunktionen und somit eine Wahrscheinlichkeitsverteilung der zu den Werten des Parameters korrespondierenden Szenarien berechnet und/oder bereitgestellt. Anhand dieser Bereitstellung wird ersichtlich, mit welcher Wahrscheinlichkeit sich beispielsweise die Installation einer Komponente lohnt.

Mit anderen Worten ist es von Vorteil mittels der ermittelten Auslegung des Energiesystems eine Wahrscheinlichkeitsverteilung der Einzelzielfunktionen zu berechnen.

Dadurch wird die Verteilung der Zielfunktionen vorteilhafterweise ableitbar. Sind die Einzelzielfunktionen beispielsweise durch die jeweiligen Gesamtkosten (für jeden Wert des Parameters) des Energiesystems gegeben, so ergibt sich durch die Ermittlung der Wahrscheinlichkeitsverteilung der Einzelzielfunktionen eine Wahrscheinlichkeitsverteilung der Gesamtkosten, die beispielsweise mittels eines Histogramms erfasst wird. Hieraus ist beispielsweise die Wahrscheinlichkeitsverteilung des Gewinns für einen Betreiber des Energiesystems darstellbar. Alternativ oder ergänzend kann die Wahrscheinlichkeitsverteilung der Kohlenstoffdioxidemissionen und/oder des Primärenergieeinsatzes ermittelt werden.

Das erfindungsgemäße Energiesystem umfasst wenigstens eine Mehrzahl von Komponenten zur Bereitstellung einer oder mehrerer Energieformen, wobei das erfindungsgemäße Energiesystem dadurch gekennzeichnet ist, dass die Komponenten eine Auslegung gemäß einem Verfahren der vorliegenden Erfindung oder einer ihrer Ausgestaltungen aufweisen.

Besonders bevorzugt ist hierbei das Energiesystem als multimodales Energiesystem ausgebildet.

Es ergeben sich zum erfindungsgemäßen Verfahren zur Ermittlung der Auslegung des Energiesystems und/oder seiner Ausgestaltungen gleichartige und gleichwertige Vorteile des erfindungsgemäßen Energiesystems.

Weitere Vorteile, Merkmale und Einzelheiten der Erfindung ergeben sich aus den im Folgenden beschriebenen Ausführungsbeispielen sowie anhand der Zeichnungen. Dabei zeigt schematisiert:
Figur 1 eine Darstellung eines Ziehens von Werten eines Parameters gemäß einer Wahrscheinlichkeitsverteilung;
Figur 2 eine zu den Werten des Parameters entsprechende Verteilung der Werte der Einzelzielfunktionen und eine daraus abgeleitete Wahrscheinlichkeitsverteilung der Einzelzielfunktionen; und
Figur 3 ein schematisches Flussdiagramm des erfindungsgemäßen Verfahrens.

Gleichartige, gleichwertige oder gleichwirkende Elemente können in einer der Figuren oder in den Figuren mit denselben Bezugszeichen versehen sein.

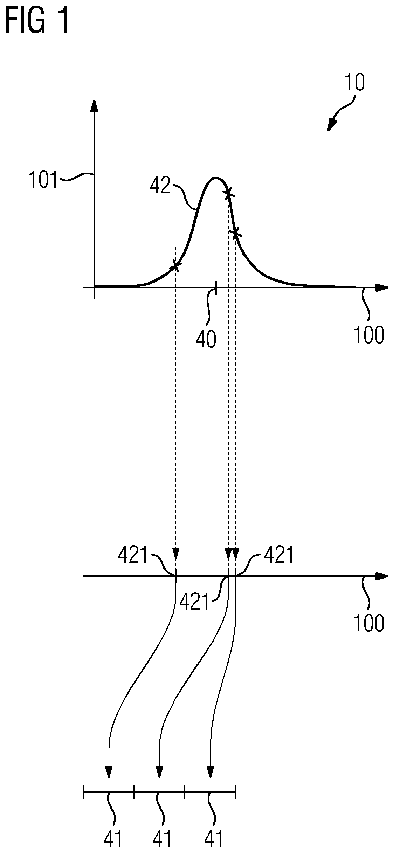

Die Figur 1 symbolisiert das Ziehen von Werten (Stichproben) wenigstens eines Parameters, insbesondere eines oder mehrere Parameter, gemäß einer für den Parameter vorliegenden Wahrscheinlichkeitsverteilung 42.

Die Wahrscheinlichkeitsverteilung 42 des Parameters ist in einem Diagramm 11 der Figur 1 aufgetragen. Hierbei ist an der Abszisse 100 des Diagramms 11 der Parameter aufgetragen. An der Ordinate 101 des Diagramms 11 ist die Wahrscheinlichkeit für einen bestimmten Wert des Parameters aufgetragen. Das Diagramm 11 zeigt somit die Wahrscheinlichkeitsverteilung 42 des Parameters.

Gemäß der Wahrscheinlichkeitsverteilung 42 wird eine Mehrzahl von Werten des Parameters gezogen. Hier wird das Ziehen von drei Werten des Parameters exemplarisch verdeutlicht. Die gezogenen Werte des Parameters sind mit den Bezugszeichen 421 gekennzeichnet. Gemäß der gezogenen Werte 421 des Parameters werden Einzelzielfunktionen des Energiesystems festgelegt und/oder bestimmt, die zu verschiedenen Szenarien 41 korrespondieren. Die verschiedenen Szenarien 41 werden hierbei parallel beim Optimierungsverfahren berücksichtigt.

Das Vorgehen wird anhand eines vereinfachten und nicht einschränkenden Ausführungsbeispiels erläutert, bei welchem der Parameter ein Gaspreis ist. Hierbei sei der Gaspreis und somit der Parameter bezüglich eines aktuellen Zeitraumes für die auf den aktuellen Zeitraum folgenden fünf Jahre normalverteilt. Mit anderen Worten wird die Unsicherheit der Werte des Gaspreises innerhalb der nächsten fünf Jahre durch eine Normalverteilung (Gauß-Verteilung) modelliert oder abgeschätzt. Die Wahrscheinlichkeitsverteilung 42 ist somit eine Normalverteilung. Der Mittelwert oder Erwartungswert des Parameters ist mit dem Bezugszeichen 40 gekennzeichnet.

Gemäß der Normalverteilung werden beispielsweise zwanzig Werte des Gaspreises gezogen (Stichproben oder Stichprobenwerte). Dieses Ziehen wird in der Figur 1 durch die vertikalen gestrichelten Pfeile symbolisiert (in Figur 1 symbolisch nur für drei Stichproben 421). Die Stichproben können im Hinblick auf das Energiesystem als Szenarien oder im Hinblick auf das Optimierungsverfahren ebenfalls als Perioden bezeichnet werden.

Entsprechend der gezogenen zwanzig Werte des Gaspreises werden zwanzig Einzelzielfunktionen des Energiesystems gegebenfalls mit zugehörigen Nebenbedingungen bereitgestellt oder festgelegt. Die zwanzig Einzelzielfunktionen beziehungsweise Szenarien werden innerhalb des Optimierungsverfahrens gemeinsam und parallel betrachtet. Das Optimierungsverfahren oder ein Optimierungsalgorithmus des Optimierungsverfahrens ermittelt jedoch nicht zwanzig einzelne Lösungen, sondern es wird eine gemeinsame Auslegung des Energiesystems ermittelt. Dies erfolgt durch einer Bildung einer Gesamtzielfunktion mittels der Einzelzielfunktionen. Allerdings werden bei der ermittelten Auslegung des Energiesystems alle zwanzig Werte des Gaspreises und somit ebenfalls ihre Wahrscheinlichkeitsverteilungen berücksichtigt. Mit anderen Worten werden nicht zwanzig verschiedene Auslegungen des Energiesystems ermittelt. Sondern es wird mittels des Optimierungsverfahrens eine für die Gesamtheit der zwanzig Werte des Gaspreises möglichst optimale Auslegung des Energiesystems ermittelt. Hierbei können die Gesamtkosten, die Kohlenstoffdioxidemissionen und/oder ein Primärenergieeinsatz des Energiesystems jeweils als Einzelzielfunktionen und somit als Gesamtzielfunktion herangezogen werden.

Nach der Ermittlung der optimalen Auslegung des Energiesystems, das heißt in Kenntnis einer möglichst optimalen Lösung, können die Einzelzielfunktionen für sich ausgewertet werden, das heißt in wenigstens eine oder mehrere der Einzelzielfunktionen wird ihr zugehöriger Wert des Parameters, insbesondere ihr zugehöriger Wert des Gaspreises, sowie die ermittelten optimalen Werte der Variablen der Optimierung, eingesetzt. Dadurch ergibt sich eine Verteilung von Werten von Einzelzielfunktionen, die eine Gewichtung der Szenarien ermöglicht. Beispielsweise wird dadurch eine Verteilung der Gesamtkosten des Energiesystems, insbesondere auf ein Jahr skaliert, ermittelt.

Hierbei kann es von Vorteil sein für jedes der Szenarien nicht einen gesamten Optimierungszeithorizont zu betrachten, sondern nur einen eingeschränkten Zeitbereich, beispielsweise festgelegte Tage, Wochen, Monate und/oder Perioden.

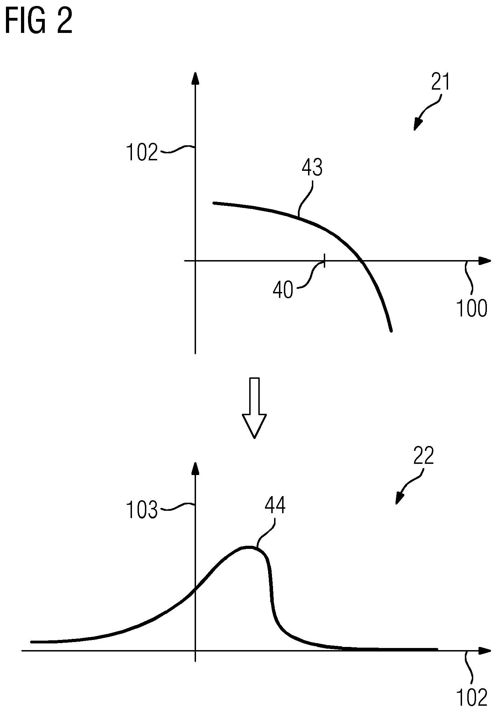

Die Figur 2 zeigt in einem Diagramm 21 die Verteilung 43 der Werte der Einzelzielfunktionen in Abhängigkeit des Parameters sowie in einem weiteren Diagramm 22 die Wahrscheinlichkeitsverteilungen der Werte der Einzelzielfunktionen beziehungsweise die Wahrscheinlichkeitsverteilungen der Einzelzielfunktionen.

An der Abszisse 100 des Diagramms 21 ist somit der Parameter, insbesondere der Gaspreis, aufgetragen. An der Ordinate 102 des Diagramms 21 sind die Einzelzielfunktion beziehungsweise die Werte der Einzelzielfunktionen aufgetragen. Die Gesamtheit der Werte der Einzelzielfunktionen kann ebenfalls als Erfolgsfaktor bezeichnet werden. Die Kurve 43 stellt somit den Erfolgsfaktor in Abhängigkeit des Parameters dar.

Der Mittelwert oder Erwartungswert des Parameters ist mit dem Bezugszeichen 40 gekennzeichnet.

Ab einem bestimmten Wert des Parameters, der hier durch den Schnittpunkt der Kurve 43 mit der Abszisse 100 festgelegt ist, wird der Erfolgsfaktor negativ, sodass sich ab diesem Wert des Parameters insbesondere die Installation oder der Betrieb einer Komponente, beispielsweise eines Blockheizkraftwerkes, nicht mehr lohnt. So kann im Nachgang eine Abschätzung über die Effizienz der Ermittelten Auslegung des Energiesystems im wahrscheinlichkeitstheoretischen Sinne getroffen werden.

Aus dem in Figur 2 dargestellten weiteren Diagramm 21 kann ebenfalls die Wahrscheinlichkeitsverteilung 44 der Einzelzielfunktionen ermittelt werden. Diese Wahrscheinlichkeitsverteilung 44 ist in einem weiteren Diagramm 22 dargestellt. Hierbei ist an der Abszisse 102 des weiteren Diagramms 22 der Wert der Einzelzielfunktion beziehungsweise der Erfolgsfaktor aufgetragen. An der Ordinate 103 des weiteren Diagramms 22 ist die zugehörige Wahrscheinlichkeit aufgetragen. Hierbei kann sich für einen bestimmten Wert einer der Einzelzielfunktionen ein Maximum in der Wahrscheinlichkeit ergeben. Sind die Einzelzielfunktionen durch die Gesamtkosten des Energiesystems ausgebildet, so ist hiermit die Wahrscheinlichkeit des Auftretens der Gesamtkosten des ausgelegten Energiesystems dargestellt. Dadurch kann eine verbesserte Ermittlung der Auslegung des Energiesystems erfolgen, die nicht auf menschlichen Annahmen basiert, sondern wahrscheinlichkeitstheoretisch und somit objektiv ermittelt werden kann.

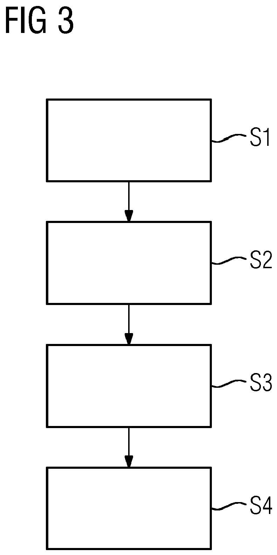

In Figur 3 ist ein Flussdiagramm des erfindungsgemäßen Verfahrens dargestellt.

In einem ersten Schritt S1 des erfindungsgemäßen Verfahrens zur Ermittlung einer Auslegung eines Energiesystems, insbesondere eines multimodalen Energiesystems, mittels eines Optimierungsverfahrens wird eine Mehrzahl von Werten wenigstens eines Parameters, insbesondere für eine Mehrzahl von Parametern, des Optimierungsverfahrens mittels eines Ziehens der Werte des Parameters gemäß einer Wahrscheinlichkeitsverteilung des Parameters bereitgestellt. Mit anderen Worten bilden die Werte des Parameters eine Stichprobe oder Stichprobenwerte aus, wobei der Parameter im wahrscheinlichkeitstheoretischen Sinne eine Zufallsvariable mit der genannten Wahrscheinlichkeitsverteilung ausbildet.

In einem zweiten Schritt S2 des erfindungsgemäßen Verfahrens wird für jeden Wert des Parameters jeweils eine zugehörige Einzelzielfunktion des Energiesystems festgelegt. Mit anderen Worten charakterisiert die Einzelzielfunktion für den Wert des Parameters das Energiesystem. Es wird somit sinnbildlich eine Mehrzahl von gleichartigen Energiesystemen betrachtet, die sich im Wert des Parameters unterscheiden (Szenarien).

In einem dritten Schritt S3 des erfindungsgemäßen Verfahrens wird mittels der Einzelzielfunktionen eine Gesamtzielfunktion ausgebildet. Die Gesamtzielfunktion kann mittels der mathematischen und/oder mittels einer gewichteten mathematischen Summe der Einzelzielfunktionen gebildet werden. Weitere äquivalente Ausbildungen, beispielsweise affine und/oder mittels einer Mehrzahl von skalaren Multiplikationen, kann vorgesehen sein.

In einem vierten Schritt S4 des erfindungsgemäßen Verfahrens wird die Gesamtzielfunktion mittels des Optimierungsverfahrens extremalisiert. Mit anderen Worten erfolgt mittels des Extremalisierens der Gesamtzielfunktion die Ermittlung der Auslegung des Energiesystems. Dadurch wird das Energiesystem vorteilhafterweise unter Berücksichtigung der stochastischen Variation des Parameters möglichst optimal ausgelegt.

Das Optimierungsverfahren kann mittels einer Rechenvorrichtung, insbesondere mittels eines Computers, erfolgen. Hierzu ist insbesondere ein Optimierungsalgorithmus vorgesehen. Weiterhin kann das Optimierungsproblem linear oder nichtlinear ausgebildet sein. Insbesondere ist für ein lineares Optimierungsproblem ein Simplex-Verfahren (auch Simplex-Algorithmus) als Optimierungsverfahren vorgesehen beziehungsweise das Optimierungsverfahren umfasst ein Simplex-Verfahren.

Die vorliegende Erfindung ermöglicht eine besonders vorteilhafte Ermittlung einer Auslegung eines Energiesystems unter Berücksichtigung der stochastischen Variation wenigstens eines Parameters, insbesondere von mehreren Parametern. Hierbei wird das stochastische Verhalten des Parameters beziehungsweise der Parameter beim Optimierungsverfahren berücksichtigt. Es erfolgt insbesondere nicht für jeden Wert des Parameters ein Optimierungsverfahren, sondern es erfolgt ein Extremalisieren der Gesamtzielfunktion unter einer in Bezug auf die gezogen Werte des Parameters gesamtheitlichen Berücksichtigung der stochastischen Variation des Parameters.

Die Implementierung von vorstehend beschriebenen Prozessen oder Verfahrensschritten, insbesondere das Optimierungsverfahren, kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger oder Festplatten. Die vorstehend beschriebenen Funktionen oder Verfahrensschritte können dabei in Form wenigstens eines Instruktionssatzes in oder auf einem computerlesbaren Speicher vorliegen. Die Funktionen oder Verfahrensschritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren oder integrierte Schaltungen im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor, Multiprocessing, Multitasking oder Parallelverarbeitung. Die Instruktionen können in lokalen Speichern abgelegt sein, es ist aber auch möglich, die Instruktionen auf einem entfernten System, insbesondere einem Wolkensystem (englisch: Cloud), beispielsweise MindSphere der Siemens AG, abzulegen und darauf via Netzwerk zuzugreifen. Der Begriff Rechenvorrichtung, wie hier verwendet, umfasst Prozessoren und Verarbeitungsmittel im weitesten Sinne, beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bestehen. Besteht ein Prozessor aus mehreren Vorrichtungen, können diese zur parallelen oder sequentiellen Verarbeitung von Instruktionen konfiguriert sein.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- S1: erster Schritt
- S2: zweiter Schritt
- S3: dritter Schritt
- S4: vierter Schritt
- 11: Diagramm
- 21: Diagramm
- 22: Diagramm
- 40: Erwartungswert
- 41: Szenario
- 42: Wahrscheinlichkeitsverteilung
- 421: Wert des Gaspreises
- 100: Abzisse - Gaspreis
- 101: Ordinate - Wahrscheinlichkeit eines Gaspreises
- 102: Ordinate - Erfolgsfaktor
- 103: Ordinate - Wahrscheinlichkeit eines Erfolgsfaktors

## Patentansprüche

1. Verfahren zur Ermittlung einer Auslegung eines Energiesystems mittels eines Optimierungsverfahrens, umfassend die Schritte:
- Bereitstellen einer Mehrzahl von Werten (421) wenigstens eines Parameters des Optimierungsverfahrens mittels eines Ziehens der Werte (421) gemäß einer Wahrscheinlichkeitsverteilung (42) des Parameters;
- Festlegen jeweils einer Einzelzielfunktion des Energiesystems für jeden der Werte (421) des Parameters;
- Ausbilden einer Gesamtzielfunktion mittels der Einzelzielfunktionen; und
- Extremalisieren der Gesamtzielfunktion mittels des Optimierungsverfahrens.

2. Verfahren gemäß Anspruch 1, bei dem die Gesamtzielfunktion mittels einer Summe der Einzelzielfunktionen gebildet wird.

3. Verfahren gemäß Anspruch 1 oder 2, bei dem für jede der Einzelzielfunktionen wenigstens eine Nebenbedingung bereitgestellt wird, wobei die Nebenbedingungen beim Extremalisieren der Gesamtzielfunktion berücksichtigt werden.

4. Verfahren gemäß einem der vorhergehenden Ansprüche, bei dem als Wahrscheinlichkeitsverteilung (42) eine Normalverteilung verwendet wird.

5. Verfahren gemäß einem der vorhergehenden Ansprüche, bei dem das Ziehen der Werte (421) des Parameters mittels eines Monte-Carlo-Verfahrens erfolgt.

6. Verfahren gemäß einem der vorhergehenden Ansprüche, bei dem als Parameter eine elektrische, thermische, chemische und/oder mechanische Last, ein Preis und/oder wenigstens eine metrologische Größe verwendet werden/wird.

7. Verfahren gemäß einem der vorhergehenden Ansprüche, bei dem als Einzelzielfunktionen die Gesamtkosten des Energiesystems und/oder die Kohlenstoffdioxidemission des Energiesystems und/oder der Primärenergieeinsatz des Energiesystems verwendet werden/wird.

8. Verfahren gemäß einem der vorhergehenden Ansprüche, bei dem der Wert jeder Einzelzielfunktion gemäß der ermittelten Auslegung des Energiesystems und mittels ihres zugehörigen Wertes (421) des Parameters berechnet wird.

9. Verfahren gemäß einem der vorhergehenden Ansprüche, bei dem mittels der ermittelten Auslegung des Energiesystems eine Wahrscheinlichkeitsverteilung der Einzelzielfunktionen berechnet wird.

10. Energiesystem, umfassend wenigstens eine Mehrzahl von Komponenten zur Bereitstellung einer oder mehrerer Energieformen, **dadurch gekennzeichnet, dass** die Komponenten eine Auslegung gemäß einem Verfahren der vorhergehenden Ansprüche aufweisen.

11. Energiesystem gemäß Anspruch 10, **dadurch gekennzeichnet, dass** das Energiesystem als multimodales Energiesystem ausgebildet ist.
